(19) Europäisches Patentamt
European Patent Office
Office européen des brevets

(11) **EP 3 511 870 B1**

(12) **FASCICULE DE BREVET EUROPEEN**

(45) Date de publication et mention de la délivrance du brevet:
**04.09.2024 Bulletin 2024/36**

(21) Numéro de dépôt: **19151778.8**

(22) Date de dépôt: **15.01.2019**

(51) Classification Internationale des Brevets (IPC):
**G06N 3/0464** (2023.01)    **G06N 3/0495** (2023.01)
**G06N 3/048** (2023.01)    **G06N 3/063** (2023.01)

(52) Classification Coopérative des Brevets (CPC):
**G06N 3/0495; G06N 3/0464;** G06N 3/048;
G06N 3/063

(54) **PROCÉDÉS D'APPRENTISSAGE DE PARAMÈTRES D'UN RÉSEAU DE NEURONES À CONVOLUTION, ET DE CLASSIFICATION D'UNE DONNÉE D'ENTRÉE**

LERNVERFAHREN VON PARAMETERN EINES NEURONALEN NETZES MIT KONVOLUTION, UND KLASSIFIZIERUNG EINER EINGANGSINFORMATION

METHODS FOR LEARNING OF PARAMETERS OF A CONVOLUTIONAL NEURAL NETWORK, AND CLASSIFICATION OF INPUT DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2018 FR 1850304**

(43) Date de publication de la demande:
**17.07.2019 Bulletin 2019/29**

(73) Titulaire: **Idemia Identity & Security France 92400 Courbevoie (FR)**

(72) Inventeurs:
• **CHABANNE, Hervé**
  **92400 Courbevoie (FR)**
• **DESPIEGEL, Vincent**
  **92400 Courbevoie (FR)**
• **MELLAKH, Anouar**
  **92400 Courbevoie (FR)**

(74) Mandataire: **Idemia**
  **2, place Samuel de Champlain**
  **92400 Courbevoie (FR)**

(56) Documents cités:
**WO-A2-2016/118206    CN-A- 107 491 787**

• **MARTÍN ABADI ET AL: "Learning to Protect Communications with Adversarial Neural Cryptography", 21 October 2016 (2016-10-21), XP055460365, Retrieved from the Internet <URL:https://arxiv.org/pdf/1610.06918v1.pdf> [retrieved on 20181116]**
• **ELOI SANFELIX ET AL: "Unboxing the White-Box Practical attacks against Obfuscated Ciphers", 13 November 2015 (2015-11-13), Amsterdam, Netherlands, XP055524403, Retrieved from the Internet <URL:https://www.blackhat.com/docs/eu-15/materials/eu-15-Sanfelix-Unboxing-The-White-Box-Practical-Attacks-Against-Obfuscated-Ciphers-wp.pdf> [retrieved on 20181116]**
• **SERGEY IOFFE ET AL: "Batch Normalization: Accelerating Deep Network Training by Reducing Internal Covariate Shift", 2 March 2015 (2015-03-02), pages 1 - 11, XP055266268, Retrieved from the Internet <URL:http://arxiv.org/pdf/1502.03167v3.pdf> [retrieved on 20160418]**

**Description**

DOMAINE TECHNIQUE GENERAL

La présente invention concerne le domaine de l'apprentissage supervisé, et en particulier des procédés d'apprentissage de paramètres d'un réseau de neurones à convolution, ou de classification d'une donnée d'entrée au moyen d'un réseau de neurones à convolution.

ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

Ils sont de plus en plus souvent déployés directement sur des ordinateurs personnels voire des terminaux mobiles.

Aujourd'hui, les CNN donnent pleinement satisfaction, mais au vu de leurs applications orientées sécurité il serait souhaitable de les sécuriser.

Plus précisément, un CNN est défini à la fois par des paramètres obtenus à l'issue d'une phase d'apprentissage et des hyperparamètres prédéterminés (dans les deux cas des poids et des biais). Les paramètres et surtout les hyperparamètres constituent des données sensibles qui devraient être traités au même titre que les paramètres dits secrets d'une fonction cryptographique. Dans la suite de la description on désignera par commodité comme paramètres d'un CNN aussi bien les paramètres que les hyperparamètres.

De façon générale, une fonction est considérée comme une « boîte noire » lorsqu'on ne peut pas accéder à son fonctionnement interne, i.e. qu'on peut connaître ses entrées et ses sorties mais pas ses paramètres secrets ou ses états intermédiaire.

L'hypothèse de boite noire impose une contrainte forte sur le stockage et la manipulation de ces paramètres. Cependant des outils ont été récemment publiés pour permettre l'automatisation d'attaques sur implémentation matérielle, attaques dites par canaux auxiliaires ou par fautes.

Aujourd'hui, pour de nombreux cas d'usages incluant l'implémentation sur des terminaux mobiles, il est nécessaire de déployer des algorithmes cryptographiques en faisant le moins d'hypothèses possibles sur la sécurité du matériel cible. Le stockage et la manipulation sécurisés des paramètres secrets doivent alors être assurés au niveau applicatif.

Le même travail doit être fait pour les CNN de sorte à éviter que les paramètres puissent être extraits et utilisés à mauvais escient si les équipements sur lesquels ils sont déployés présentent des vulnérabilités.

La cryptographie dite boite blanche vise à répondre à ce défi pour les algorithmes cryptographiques en proposant des implémentations qui sont sensés rendre l'extraction des secrets impossible, même en cas d'attaque permettant à l'attaquant un accès complet à l'implémentation logicielle de l'algorithme. Plus précisément, une fonction est considérée comme une « boîte blanche » lorsque ses mécanismes sont visibles et permettent d'en comprendre le fonctionnement. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense. On parle alors « d'implémentation blanchie » d'un calcul élémentaire de l'algorithme lorsqu'on arrive à représenter ce calcul sous une forme sécurisée évitant d'avoir les clés utilisées en clair, par exemple en représentant le calcul par une table stockée en mémoire.

Cependant, ces techniques d'implémentation blanchie ne sont en l'état pas utilisables sur les CNN. En particulier, les tailles des tables requises sont colossales, et inadaptées aux équipements tels que les terminaux mobiles sur lesquels l'implémentation blanchie est souhaitable, ces équipements ayant généralement des ressources moindres.

Il serait par conséquent souhaitable de disposer d'une nouvelle solution d'apprentissage des paramètres d'un CNN / classification de données au moyen du CNN qui soit pleinement compatible avec une implémentation blanchie et ne limite pas la taille du CNN ou son efficacité.

Martín Abadi ET AL: "Learning to Protect Communications with Adversarial Neural Cryptography",, 21 octobre 2016 (2016-10-21), Extrait de l'Internet:URL:https://arxiv.org/ pdf/1610.06918v1.pdf présente l'utilisation d'un réseau de neurones pour la cryptographie.

WO 2016/118206 A2 (MICROSOFT TECHNOLOGY LICENSING LLC [US]) 28 juillet 2016 (2016-07-28) présente l'utilisation des réseaux de neurones pour des données chiffrées, mais aussi un réseau de neurones qui est chiffré.

PRESENTATION DE L'INVENTION

Selon un premier aspect, la présente invention concerne un procédé selon la revendication 1.

Selon d'autres caractéristiques avantageuses et non limitatives de ce procédé sont définies dans les revendications dépendantes 2 à 7.

Selon un deuxième aspect, la présente invention concerne l'utilisation du CNN issu de l'apprentissage pour réaliser la classification d'une donnée d'entrée.

Selon un troisième et un quatrième aspect, l'invention propose un produit programme d'ordinateur comprenant des instructions de code pour la mise en oeuvre du procédé selon le premier aspect ou la mise en oeuvre de l'utilisation selon le deuxième aspect; et un moyen de stockage lisible par un équipement informatique sur lequel un produit programme d'ordinateur comprend des instructions de code pour la mise en oeuvre du procédé selon le premier aspect ou la mise en oeuvre de l'utilisation selon le deuxième aspect.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'une architecture pour la mise en oeuvre des procédés selon l'invention
- les figures 2a-2c représentent trois exemples de réseaux de neurones à convolution, respectivement connu, conforme à un premier mode de réalisation de l'invention, et conforme à un deuxième mode de réalisation de l'invention.

DESCRIPTION DETAILLEE

*Architecture*

Selon deux aspects complémentaires de l'invention, sont proposés :

- un procédé d'apprentissage de paramètres d'un réseau de neurones à convolution (CNN) pour classification de données ; et
- un procédé de classification d'une donnée d'entrée utilisant un CNN, appris grâce au premier procédé.

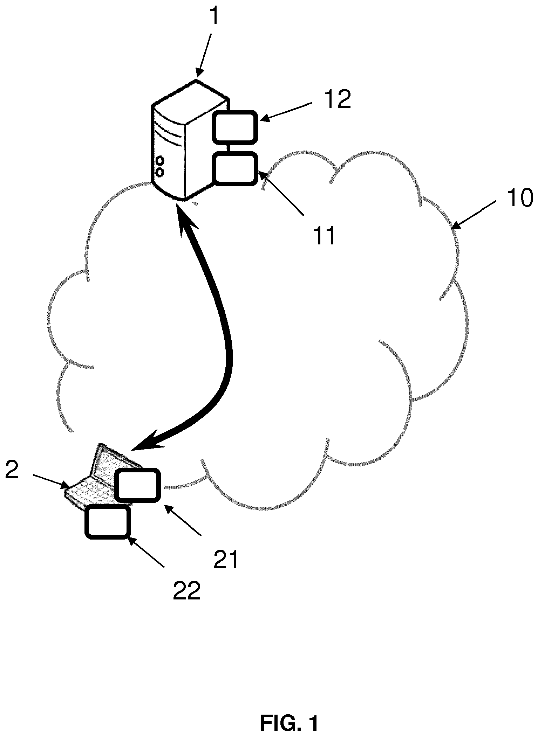

Ces deux types de procédés sont mis en oeuvre au sein d'une architecture telle que représentée par la **figure 1,** grâce à un serveur 1 et un terminal 2. Le serveur 1 est l'équipement d'apprentissage (mettant en oeuvre du premier procédé) et le terminal 2 est un équipement de classification (mettant en oeuvre le deuxième procédé). Il est tout à fait possible que ces deux équipements soient confondus, mais la présente invention se distingue tout particulièrement au cas où le terminal 2 est un équipement d'un utilisateur peu sécurisé, tel qu'un smartphone ou une tablette tactile.

En effet, il est proposé un procédé de classification « boite blanche » destiné à être mis en oeuvre par un équipement ne disposant pas particulièrement d'un matériel sécurisé et qui peut faire l'objet d'attaques sur implémentation matérielle, et pour lequel l'approche boite blanche prend tout son intérêt.

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et au moins le terminal 2 a des moyens de stockage de données 22 telle qu'une mémoire informatique, par exemple une mémoire flash, généralement peu sécurisée.

Le serveur 1 peut également avoir une mémoire 12, par exemple un disque dur, pour stocker ladite base de données d'apprentissage, i.e. un ensemble de données déjà classifiées (par opposition aux données dites d'entrée que l'on cherche justement à classifier).

Les utilisateurs des terminaux 10 sont typiquement des « clients » au sens commercial du terme de l'opérateur du serveur 1.

En effet, les données d'entrée ou d'apprentissage sont avantageusement représentatives d'images (ladite classification étant une reconnaissance d'objet), et on citera un exemple dans lequel le terminal 1 est un smartphone comprenant une caméra frontale, et l'utilisateur souhaite la classification des images (potentiellement confidentielles) prises par la caméra.

*CNN*

Un CNN contient généralement quatre types de couches traitant successivement l'information :

- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire *NL* est typiquement la fonction *ReLU* (Rectified Linear Unit, i.e. Unité de Rectification Linéaire) qui est égale à $f(x) = max(0, x)$ et la couche de pooling (noté *POOL*) la plus utilisée est la fonction *MaxPool2$\times$2* qui correspond à un maximum entre quatre valeurs d'un carré (on met en commun quatre valeurs en une seule).

La couche de convolution, notée *CONV,* et la couche entièrement connectée, notée FC, correspondent généralement à un produit scalaire entre les neurones de la couche précédente et les poids du CNN.

Les architectures typiques de CNN empilent quelques paires de couches *CONV → NL* puis ajoutent une couche *POOL* et répètent ce schéma *[(CONV →*

NL)$^P$ → POOL] jusqu'à obtenir un vecteur de sortie de taille suffisamment petite, puis terminent par deux couches entièrement connectées *FC*.

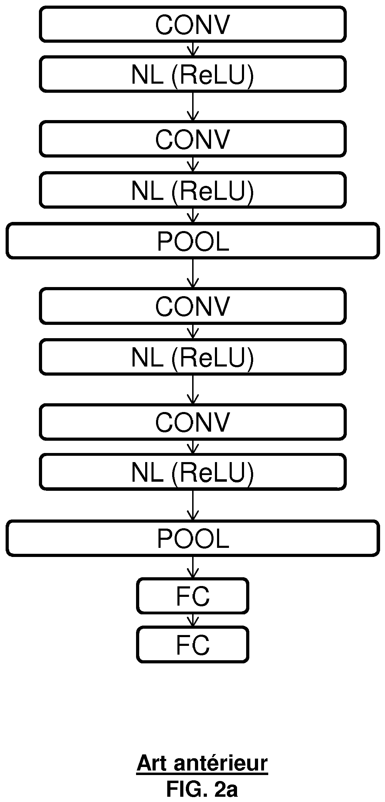

Voici une architecture CNN typique (dont un exemple est représenté par la **figure 2a**) :

INPUT → [(CONV → NL]$^p$ → POOL]$^n$ → FC → FC

Dans le cadre de la présente invention, des architectures spécifiques de CNN facilement « blanchis » vont être à présent décrites.

*Procédé d'apprentissage*

Selon un premier aspect, est proposé le procédé d'apprentissage, mis en oeuvre par les moyens de traitement de données 11 du serveur 1.

Dans une étape (a1), à partir de ladite base de données d'apprentissage déjà classifiées, le premier serveur apprend les paramètres d'un CNN spécifique dit quantifié. Un CNN quantifié est tel que lesdits paramètres sont à valeur dans un espace discret, en d'autres termes peuvent prendre un nombre limité de valeurs. Cela s'oppose aux CNN classiques dans lequel les paramètres sont des réels, par exemple entre 0 et 1.

De façon préférée, les paramètres sont à valeur dans un espace {0; 1}$^n$ qu'on notera $\mathbb{F}_2^n$, avec $n \leq 8$, c'est-à-dire que l'on travaille sur des quantifications sur un nombre limité de bits. Si $n = 8$, les paramètres ont une taille d'un octet (un « byte » de 8 bits). Si $n = 4$, les paramètres ont une taille d'un semioctet (un « nibble » de 4 bits). Si $n = 1$, les paramètres ont une taille d'un bit (ils valent 1 ou 0 uniquement).

De façon préférée, n vaut 1, 2 ou 4. Un CNN quantifié où les paramètres sont à valeur dans {0; 1} est appelé un CNN binaire, et un tel CNN sera particulièrement préféré.

L'utilisation de tels CNN quantifiés voire binaire est connue pour les plateformes avec des ressources de calcul limitées. Les CNN quantifiés ont des performances moindres mais néanmoins proches des CNN sans quantification.

L'homme du métier pourra consulter à leur sujet les documents :

- Shuchang Zhou, Zekun Ni, Xinyu Zhou, He Wen, Yuxin Wu, Yuheng Zou: DoReFa-Net: Training Low Bitwidth Convolutional Neural Networks with Low Bitwidth Gradients;
- Mohammad Rastegari, Vicente Ordonez, Joseph Redmon, Ali Farhadi: XNOR-Net: ImageNet Classification Using Binary Convolutional Neural Networks. ECCV (4) 2016: 525-542;
- Wei Tang, Gang Hua, Liang Wang: How to Train a Compact Binary Neural Network with High Accuracy? AAAI 2017: 2625-2631;
- Anwar, S., Hwang, K., Sung, W.: Fixed point optimization of deep convolutional neural networks for object recognition. In: Acoustics, Speech and Signal Processing (ICASSP), 2015 IEEE International Conférence on, IEEE (2015) 1131-1135.

Par ailleurs, de façon préférée, outre le fait qu'il soit quantifié le présent CNN est de type « fully convolutional » (entièrement convolutionnel), c'est-à-dire qu'il ne comprend pas de couche entièrement connectée *FC*. Pour reformuler, le CNN quantifié ne comprend plus que des couches de convolution *CONV,* non linéaire *NL,* et de pooling *POOL.* Eventuellement, des couches de normalisation en batch (BN) peuvent encore être présentes.

A chaque couche, le CNN travaille sur la totalité de la taille de la donnée d'entrée. Les CNN fully convolutional sont utilisés par exemple en analyse d'image où ils apportent une qualité de traitement très élevée, dans la mesure où toutes les couches travaillent sur toute l'image.

On reviendra en détail plus loin sur les caractéristiques des CNN fully convolutionnal, mais l'homme du métier pourra consulter à leur sujet le document Jonathan Long, Evan Shelhamer, Trevor Darrel: Fully Convolutional Networks for Semantic Segmentation.

Il peut sembler paradoxal de combiner l'aspect quantifié et l'aspect fully convolutionnal, dans la mesure où ces propriétés ont des buts opposés en termes de performances. Cependant, ces propriétés ont aussi pour effet de diminuer respectivement la taille des paramètres et le nombre des paramètres. Ensemble, cela diminue très fortement la taille des tables nécessaires pour blanchir au moins partiellement le CNN, et rend possible un fonctionnement boite blanche sur du matériel standard tel qu'un smartphone.

Pour expliquer cela, il faut revenir sur le fonctionnement d'une couche de convolution. Celle-ci extrait des caractéristiques d'une donnée d'entrée par filtrage, et les combine de sorte à générer une donnée de sortie de la couche, par exemple une image. On parle de « volumes » d'entrée/sortie, car on définit comme troisième dimension une profondeur d'entrée/sortie. De façon générale, on peut définir un volume d'entrée/sortie de profondeur k comme un ensemble de k canaux, lesquels sont souvent appelés par le terme anglais « features maps ». Par exemple, une donnée initiale telle qu'une image a une profondeur de 3 si on considère les 3 features maps correspondant aux 3 couleurs RGB.

La couche de convolution ne traite pas toute la donnée d'entrée à la fois, mais seulement « bloc par bloc ». On appelle « champ récepteur » l'élément spatial de base qui définit la taille d'un bloc et qui va être déplacé sur le volume d'entrée, et dont la taille correspond à celle du filtre de la couche. Le nombre de filtres appliqués définit la profondeur de sortie.

En résumé, une couche de convolution standard est paramétrisée par un « noyau » de taille D x D x M x N où D est la largeur spatiale du champ récepteur (c'est le plus souvent un carré de 3 pixels de cotés) M la profondeur d'entrée (le nombre de features maps) et N est la profondeur de sortie.

La profondeur de sortie monte graduellement au fur et à mesure des couches, et on atteint couramment 512 voire 1024 features maps. Simultanément, la taille spatiale des features maps diminue au fur et à mesure des couches (on termine par exemple à $3 \times 3$).

Ainsi, on utilise une couche entièrement connectée *FC* finale qui combine toutes les features maps finales en un seul classifieur. Le filtre associé à la couche FC est donc gigantesque, par exemple de taille $1024 \times 128$, et utilise une part significative de l'ensemble des paramètres du CNN.

En reprenant les chiffres ci-dessus, si l'on remplace la couche *FC* par M couches de convolution $3 \times 3 \times 1$ plus une couche de convolution $1 \times 1 \times 1028 \times 128$, on divise en pratique le nombre de paramètres impliqués par neuf.

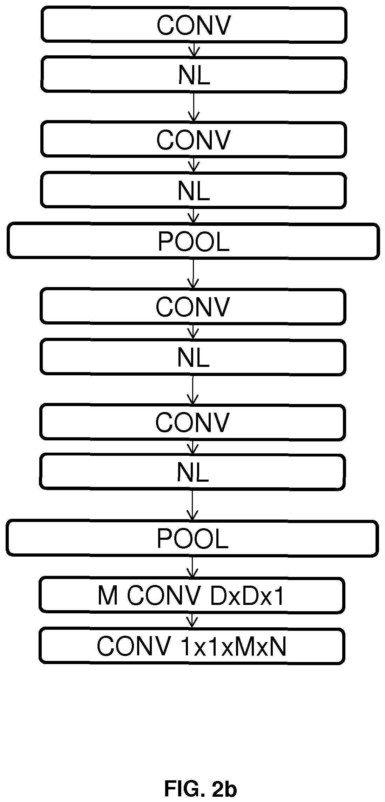

La **figure 2b** représente un exemple d'un CNN fully convolutionnal préféré d'architecture : $INPUT \rightarrow [[CONV \rightarrow NL]^p \rightarrow POOL]^n \rightarrow M\ CONV\ DxDx1 \rightarrow CONV\ 1x1xMxN$

De façon particulièrement préférée, on peut diminuer encore le nombre de poids et leur taille en utilisant des « convolutions séparables » telles que présentées dans le document *Andrew G. Howard, Menglong Zhu, Bo Chen, Dmitry Kalenichenko, Weijun Wang, Tobias Weyand, Marco Andreetto, Hartwig Adam : MobileNets: Efficient Convolutional Neural Networks for Mobile Vision Applications.*

L'idée est de remplacer chaque convolution D x D x M x N par une succession d'une première convolution D x D x M dite « depthwise » (appliquant un unique filtre à chaque feature map d'entrée) et d'une deuxième convolution $1 \times 1 \times M \times N$ dite « pointwise » (combinant les sorties de la première convolution). Une couche NL peut être ajoutée entre les deux convolutions. En pratique, une telle séparation des convolutions peut encore permettre de diviser le nombre de paramètres d'un facteur sept.

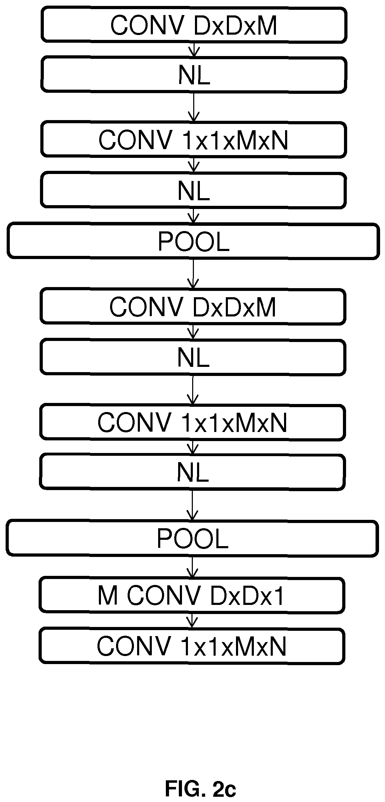

La **figure 2c** représente un exemple d'un CNN à convolutions séparables préféré d'architecture : $INPUT \rightarrow [[CONV\ DxDxM \rightarrow NL \rightarrow CONV\ 1x1xmxN \rightarrow NL]^P \rightarrow POOL]^n \rightarrow M\ CONV\ DxDx1 \rightarrow CONV\ 1x1xMxN$. A noter que les valeurs D, M, et N varient selon la couche.

Dans une étape (a2), les moyens de traitement de données 21 génèrent une implémentation blanchie d'au moins une couche dudit CNN quantifié, ladite implémentation blanchie étant prédéterminée en fonction d'au moins un des dits paramètres appris.

On rappelle que par implémentation blanchie, ou « white box implementation », d'une opération, on entend une représentation de l'opération qui ne permette pas de remonter aux états internes ou aux paramètres lorsque l'opération est exécutée (par application de l'implémentation blanchie aux données d'entrée), en particulier une table (on parle de représentation tabulée).

Cela signifie que l'opération associée à ladite couche blanchie est représentée par une table prédéfinie à l'intérieur de laquelle le ou les paramètres (ceux appris et les hyperparamètres) sont « enfouis ».

Les propriétés attendues du blanchiment d'application font que l'observation de l'exécution de l'implémentation blanchie ne doit pas permettre de retrouver les valeurs des paramètres enfouies dans le calcul.

De façon préféré, au moins la ou les couches de convolution font l'objet d'une implémentation blanchie, puis la ou les couches de pooling, et enfin la ou les couches non linéaires. A noter qu'un ensemble de couches, voire tout le CNN peut faire l'objet d'une unique représentation blanchie, mais pour réduire la taille des tables, les entrées d'une couche peuvent être découpées.

Au moins deux couches consécutives font l'objet d'une implémentation blanchie. Ainsi, des couches artificielles qui n'ont aucun effet sont ajoutées lorsque cela est possible à l'entrée et à la sortie de tables ; par exemple, si $T_1$ et $T_2$ sont les tables représentant deux couches successives, $T_1 \circ T_2$ est remplacé par $(T_1 \circ P) \circ (P^{-1} \circ T_2)$ où P est un encodage interne bijectif tiré au hasard. Cela permet de « masquer » les états internes du CNN, car seules les valeurs $T_1 \circ P(x)$ et $P^{-1} \circ T_2(y)$ n'apportent aucune information sur les paramètres enfouis dans les tables $T_1$ et $T_2$.

L'homme du métier pourra consulter au sujet des implémentations blanchies les documents :

- Stanley Chow, Philip A. Eisen, Harold Johnson, Paul C. van Oorschot: A White-Box DES Implementation for DRM Applications. Digital Rights Management Workshop 2002
- Stanley Chow, Philip A. Eisen, Harold Johnson, Paul C. van Oorschot: White-Box Cryptography and an AES Implementation. Selected Areas in Cryptography 2002
- Brecht Wyseur, "White-Box Cryptography", PhD thesis, Katholieke Universiteit Leuven, 2009

Ces documents concernent des fonctions cryptographiques mais l'homme du métier saura transposer leur enseignement à des couches de CNNs.

*Procédé de classification*

Selon un deuxième aspect, est proposé le procédé de classification d'une donnée d'entrée, mis en oeuvre par les moyens de traitement de données 21 du terminal 2.

Le procédé de classification comprend trois grandes étapes : dans une première étape (a) est mis en oeuvre l'apprentissage d'un CNN quantifié tel que défini précédemment, dans une deuxième étape (b) l'implémentation blanchie générée pour ce CNN est stockée sur les moyens de stockage de données 22 du terminal 2, et dans une troisième étape (c) les moyens de traitement de données 21 du terminal 2 classifient ladite donnée d'entrée, au moyen du CNN quantifié, en appliquant ladite implémentation blanchie.

Il est ainsi possible d'utiliser le CNN, sans que les paramètres et les hyperparamètres enfouis dans l'implémentation blanchie soient accessibles.

*Produit programme d'ordinateur*

Selon un troisième et un quatrième aspects, l'invention concerne un produit programme d'ordinateur comprenant des instructions de code pour la mise en oeuvre (en particulier sur les moyens de traitement de données 21, 22 du serveur 1 ou du terminal 2) d'un procédé selon le premier aspect de l'invention d'apprentissage de paramètres d'un CNN ou d'une utilisation selon le deuxième aspect de l'invention, ainsi que des moyens de stockage lisibles par un équipement informatique (une mémoire du serveur 1 ou du terminal 1) sur lequel on trouve ce produit programme d'ordinateur.

**Revendications**

1. Procédé d'apprentissage de paramètres d'un réseau de neurones à convolution, CNN, pour classification de données, le procédé comprenant la mise en oeuvre par des moyens de traitement de données (11) d'un serveur (1), d'étapes de :

    (a1) Apprentissage, à partir d'une base de données d'apprentissage déjà classifiées, des paramètres d'un CNN quantifié, lesdits paramètres étant à valeur dans un espace discret;
    (a2) Génération d'une implémentation dudit CNN quantifié comprenant la représentation d'opérations associées à deux couches consécutives dudit CNN quantifié sous la forme d'une première table $T_1$ associée à la première couche desdites deux couches consécutives et d'une deuxième table $T_2$ associée à la deuxième couche desdites deux couches consécutives, le remplacement de la première table par $T_1 \circ P$ et le remplacement de la deuxième table par $P^{-1} \circ T_2$, où $P$ est un encodage interne bijectif tiré au hasard et $P^{-1}$ sa fonction inverse, les encodages $P$ et $P^{-1}$ étant implémentés en rajoutant des couches artificielles n'ayant aucun effet respectivement à la sortie et à l'entrée des tables $T_1$ et $T_2$ ;
    (a₃) Déploiement l'implémentation dudit CNN quantifié ainsi générée sur un terminal (2) relié au travers d'un réseau informatique (10) au serveur (1).

2. Procédé selon la revendication 1, dans lequel les paramètres du CNN quantifié sont à valeur dans l'espace $\{0; 1\}^n$ avec $n \le 8$.

3. Procédé selon la revendication 2, dans lequel n vaut 1, 2 ou 4.

4. Procédé selon l'une des revendications 1 à 3, dans lequel le CNN quantifié ne comprend pas de couche complètement connectée.

5. Procédé selon l'une des revendications 1 à 4, dans lequel les deux couches consécutives sont deux couches de convolution.

6. Procédé selon l'une des revendications 1 à 4, dans lequel les deux couches consécutives sont une couche de convolution et une couche non linéaire.

7. Procédé selon l'une des revendications 5 et 6, dans lequel le CNN est dit à convolutions séparables, et comprend des premières couches de convolution mettant en oeuvre un unique filtre par canal d'entrée, et des deuxièmes couches de convolution chacune combinant les sorties d'une première couche de convolution.

8. Utilisation, par des moyens de traitement de données (21) d'un terminal (2) relié au travers d'un réseau informatique (10) à un serveur (1), du CNN quantifié résultant du procédé d'apprentissage selon l'une des revendications 1 à 7, pour classifier une donnée.

9. Produit programme d'ordinateur comprenant des instructions de code pour la mise en oeuvre du procédé selon l'une des revendications 1 à 7, ou pour la mise en oeuvre de l'utilisation selon la revendication 8, lorsque ledit programme est exécuté sur un ordinateur.

10. Moyen de stockage lisible par un équipement informatique sur lequel un produit programme d'ordinateur comprend des instructions de code pour la mise en oeuvre du procédé selon l'une des revendications 1 à 7, ou pour la mise en oeuvre de l'utilisation selon la revendication 8.

**Patentansprüche**

1. Verfahren zum Lernen von Parametern eines faltenden neuronalen Netzes, CNN, zur Klassifizierung von Daten, wobei das Verfahren das Ausführen, durch Datenverarbeitungseinrichtungen (11) eines Servers (1), der folgenden Schritte umfasst:

    (a1) Lernen, ausgehend von einer Datenbank mit bereits klassifizierten Lerndaten, der Parameter eines quantisierten CNN, wobei die Parameter einen Wert in einem diskreten Raum haben;
    (a2) Erzeugen einer Implementierung des quantisierten CNN, umfassend die Darstellung von Operationen, die zwei aufeinander folgenden Schichten des quantisierten CNN zugeordnet sind in Form einer ersten Tabelle $T_1$, die der ersten Schicht der beiden aufeinander folgenden Schichten zugeordnet ist, und einer zweiten Tabelle $T_2$, die der zweiten Schicht der beiden aufeinander folgenden Schichten zugeordnet ist, das Ersetzen der ersten Tabelle durch $T_1 \circ P$ und das Ersetzen der zweiten Tabelle durch $P^{-1} \circ T_2$, worin P eine zufällig gezogene bijektive interne Codierung ist und $P^{-1}$ ihre Umkehrfunktion ist, wobei die Codierungen $P$ und $P^{-1}$ implementiert werden, indem künstliche Schichten hinzugefügt werden, die keine Wirkung auf die Ausgabe beziehungsweise auf die Eingabe der Tabellen $T_1$ und $T_2$ haben;
(a3) Bereitstellen der Implementierung des so erzeugten quantisierten CNN auf einem Endgerät (2), das über ein Computernetzwerk (10) mit dem Server (1) verbunden ist.

2. Verfahren nach Anspruch 1, wobei die Parameter des quantisierten CNN einen Wert in dem Raum $\{0; 1\}^n$ mit $n \leq 8$ haben.

3. Verfahren nach Anspruch 2, wobei n gleich 1, 2 oder 4 ist.

4. Verfahren nach einem der Ansprüche 1 bis 3, wobei das quantisierte CNN keine vollständig verbundene Schicht umfasst.

5. Verfahren nach einem der Ansprüche 1 bis 4, wobei die beiden aufeinander folgenden Schichten zwei Faltungsschichten sind.

6. Verfahren nach einem der Ansprüche 1 bis 4, wobei die beiden aufeinander folgenden Schichten eine Faltungsschicht und eine nichtlineare Schicht sind.

7. Verfahren nach einem der Ansprüche 5 und 6, wobei das CNN als mit trennbaren Faltungen bezeichnet wird und erste Faltungsschichten, die einen einzigen Filter je Eingabekanal ausführen, und zweite Faltungsschichten, die jeweils die Ausgaben einer ersten Faltungsschicht kombinieren, umfasst.

8. Verwendung, durch Datenverarbeitungseinrichtungen (21) eines Endgeräts (2), das über ein Computernetzwerk (10) mit einem Server (1) verbunden ist, des quantisierten CNN, das aus dem Verfahren zum Lernen nach einem der Ansprüche 1 bis 7 resultiert, um ein Datenelement zu klassifizieren.

9. Computerprogrammprodukt, das Codeanweisungen umfasst, die bei der Ausführung des Programms auf einem Computer das Verfahren nach einem der Ansprüche 1 bis 7 ausführen oder die Verwendung nach Anspruch 8 ausführen.

10. Speichereinrichtung, die von einem Datenverarbeitungsgerät lesbar ist und auf der ein Computerprogrammprodukt Codeanweisungen zum Ausführen des Verfahrens nach einem der Ansprüche 1 bis 7 oder zum Ausführen der Verwendung nach Anspruch 8 umfasst.

**Claims**

1. Method for learning parameters of a convolutional neural network, CNN, in order to classify data, the method comprising the implementation, by data processing means (11) of a server (1), of the following steps:

   (a1) learning, from a database of already classified learning data, the parameters of a quantized CNN, said parameters being valued in a discrete space;
   (a2) generating an implementation of said quantized CNN, comprising representing operations associated with two consecutive layers of said quantized CNN in the form of a first table $T_1$ associated with the first layer of said two consecutive layers and a second table $T_2$ associated with the second layer of said two consecutive layers, replacing the first table with $T_1 \circ P$ and replacing the second table with $P^{-1} \circ T_2$, where P is a randomly drawn bijective internal encoding and $P^{-1}$ is its inverse function, the encodings $P$ and $P^{-1}$ being implemented by adding artificial layers that have no effect to the output and to the input of the tables $T_1$ and $T_2$, respectively;
   (a3) deploying the implementation of said quantized CNN thus generated on a terminal (2) connected to the server (1) via a computer network (10).

2. Method according to Claim 1, wherein the parameters of the quantized CNN are valued in the space $\{0; 1\}^n$ with $n < 8$.

3. Method according to Claim 2 wherein n is 1, 2 or 4.

4. Method according to one of Claims 1 to 3, wherein the quantized CNN does not comprise any fully connected layer.

5. Method according to one of Claims 1 to 4, wherein the two consecutive layers are two convolutional layers.

6. Method according to one of Claims 1 to 4, wherein the two consecutive layers are a convolutional layer and a non-linear layer.

7. Method according to either of Claims 5 and 6, wherein the CNN is what is referred to as a separable-convolution CNN, and comprises first convolutional layers implementing a single filter per input channel, and second convolutional layers each combining the outputs of a first convolutional layer.

8. Use, by data processing means (21) of a terminal (2) connected to a server (1) via a computer network (10), of the quantized CNN resulting from the learning method according to one of Claims 1 to 7 to classify a datum.

9. Computer program product comprising code instructions for implementing the method according to one of Claims 1 to 7, or for implementing the use according to Claim 8, when said program is executed on a computer.

10. Storage means able to be read by a computer equipment on which a computer program product comprises code instructions for implementing the method according to one of Claims 1 to 7, or for implementing the use according to Claim 8.

**FIG. 1**

CONV

↓

NL (ReLU)

↓

CONV

↓

NL (ReLU)

↓

POOL

↓

CONV

↓

NL (ReLU)

↓

CONV

↓

NL (ReLU)

↓

POOL

↓

FC

↓

FC

**Art antérieur**
**FIG. 2a**

```
┌─────────────────────┐
│        CONV         │
└─────────────────────┘
           ↓
┌─────────────────────┐
│         NL          │
└─────────────────────┘
           ↓
┌─────────────────────┐
│        CONV         │
└─────────────────────┘
           ↓
┌─────────────────────┐
│         NL          │
└─────────────────────┘
           ↓
┌─────────────────────────┐
│          POOL           │
└─────────────────────────┘
           ↓
┌─────────────────────┐
│        CONV         │
└─────────────────────┘
           ↓
┌─────────────────────┐
│         NL          │
└─────────────────────┘
           ↓
┌─────────────────────┐
│        CONV         │
└─────────────────────┘
           ↓
┌─────────────────────┐
│         NL          │
└─────────────────────┘
           ↓
┌─────────────────────────┐
│          POOL           │
└─────────────────────────┘
           ↓
┌─────────────────────┐
│   M CONV DxDx1      │
└─────────────────────┘
           ↓
┌─────────────────────┐
│   CONV 1x1xMxN      │
└─────────────────────┘
```

**FIG. 2b**

**FIG. 2c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016118206 A2

**Littérature non-brevet citée dans la description**

- **MARTÍN ABADI et al.** *Learning to Protect Communications with Adversarial Neural Cryptography,* 21 Octobre 2016, https://arxiv.org/pdf/1610.06918v1.pdf
- **SHUCHANG ZHOU ; ZEKUN NI ; XINYU ZHOU ; HE WEN, ; YUXIN WU ; YUHENG ZOU.** *DoRe-Fa-Net: Training Low Bitwidth Convolutional Neural Networks with Low Bitwidth Gradients;*
- **MOHAMMAD RASTEGARI ; VICENTE ORDONEZ ; JOSEPH REDMON, ; ALI FARHADI.** XNOR-Net: ImageNet Classification Using Binary Convolutional Neural Networks. *ECCV,* 2016, 525-542
- **WEI TANG ; GANG HUA ; LIANG WANG.** How to Train a Compact Binary Neural Network with High Accuracy?. *AAAI,* 2017, 2625-2631
- **ANWAR, S., ; HWANG, K. ; SUNG, W.** Fixed point optimization of deep convolutional neural networks for object recognition. *Acoustics, Speech and Signal Processing (ICASSP), 2015 IEEE International Conférence on, IEEE,* 2015, 1131-1135
- **JONATHAN LONG ; EVAN SHELHAMER ; TREVOR DARREL:.** *Fully Convolutional Networks for Semantic Segmentation.*
- **NDREW G. HOWARD, ; MENGLONG ZHU ; BO CHEN, ; DMITRY KALENICHENKO ; WEIJUN WANG ; TOBIAS WEYAND ; MARCO ANDREETTO ; HARTWIG ADAM.** *MobileNets: Efficient Convolutional Neural Networks for Mobile Vision Applications.*
- **STANLEY CHOW, ; PHILIP A. EISEN ; HAROLD JOHNSON ; PAUL C. VAN OORSCHOT.** : A White-Box DES Implementation for DRM Applications. *Digital Rights Management Workshop,* 2002
- **STANLEY CHOW, ; PHILIP A. EISEN, ; HAROLD JOHNSON ; PAUL C. VAN OORSCHOT.** White-Box Cryptography and an AES Implementation. *Selected Areas in Cryptography,* 2002
- White-Box Cryptography. **BRECHT WYSEUR.** PhD thesis. Katholieke Universiteit Leuven, 2009